# EUROPÄISCHE PATENTSCHRIFT

(11) **EP 0 791 684 B1**
(45) Veröffentlichungstag und Bekanntmachung des Hinweises auf die Patenterteilung: **09.05.2001**
(21) Anmeldenummer: 96117464.6
(22) Anmeldetag: 31.10.1996
(51) Int. Cl.: D21F 7/00, B65G 15/00

(54) **Wechselvorrichtung**
Conveyor belt changing device
Dispositif de changement d'une bande de transport

(30) Priorität: 29.01.1996 DE 19603029
(43) Veröffentlichungstag der Anmeldung: 27.08.1997
(73) Patentinhaber: Voith Paper Patent GmbH, 89522 Heidenheim (DE)
(72) Erfinder: Schmitt, Anton, 89522 Heidenheim (DE)

(56) Entgegenhaltungen:
- DE-A- 2 936 967
- DE-U- 29 601 434

## Beschreibung

Die Erfindung betrifft eine Wechselvorrichtung für ein in einer Maschine zur Herstellung einer Papier- oder Kartonbahn - beispielsweise in einer Trockenpartie der Maschine - verwendetes Transportband, mit einer Wickeleinrichtung zum Ausbringen eines gebrauchten und zum Einbringen eines neuen Transportbandes.

Außerdem betrifft die Erfindung ein Verfahren zum Wechseln eines in einer Maschine zur Herstellung einer Papier- oder Kartonbahn - beispielsweise in einer Trockenpartie der Maschine - verwendeten Transportbandes.

Wechselvorrichtungen der hier angesprochenen Art sind bekannt. Sie werden beispielsweise in Papier- oder Kartonherstellungsmaschinen eingesetzt, um das auch als Trockensieb oder -filz bezeichnete Transportband austauschen zu können. An bestimmten Stellen der Papierherstellungsmaschine sind spezielle Fundamente eingebracht, auf die die Wechselvorrichtung aufgebracht wird, um das Transportband beziehungsweise den Filz wechseln zu können. Der Raumbedarf derartiger Wechselvorrichtungen ist relativ groß. Außerdem ist es sehr kostenaufwendig an allen erforderlichen Stellen innerhalb der Papierherstellungsmaschine derartige Fundamente für Wechselvorrichtungen einzubringen.

Es ist daher Aufgabe der Erfindung, eine Wechselvorrichtung für ein Transportband sowie ein Verfahren zum Wechseln eines Transportbandes der eingangs genannten Art zu schaffen, die die genannten Nachteile nicht aufweisen.

Zur Lösung dieser Aufgabe wird eine Wechselvorrichtung vorgeschlagen, die die in Anspruch 1 genannten Merkmale aufweist. Die Wechselvorrichtung weist eine Wickeleinrichtung auf, die dazu dient, das gebrachte Transportband aufzuwickeln und ein neues Transportband abzuwickeln. Es ist damit ein Austausch des gebrauchten Transportbandes gegen ein neues möglich. Die erfindungsgemäße Wechselvorrichtung zeichnet sich dadurch aus, dass die Wickeleinrichtung eine mobile Trägereichrichtung aufweist, die an den jeweiligen Ort des Transportbandwechsels verlagerbar und auf welcher die Wickeleinrichtung verfahrbar ist. Innerhalb einer Maschine, in der das Transportband verwendet wird, bedarf es daher keiner Einrichtungen mehr, die der Wechselvorrichtung zugeordnet sind. Die Maschine kann daher sehr viel kompakter und auch kostengünstiger aufgebaut werden.

Besonders bevorzugt wird ein Ausführungsbeispiel einer Wechselvorrichtung, die sich dadurch auszeichnet, dass die Trägereinrichtung mindestens zwei gegeneinander verlagerbare Trägerelemente aufweist. Die Trägereinrichtung kann daher relativ leicht aufgebaut werden. Es wird zunächst eines der Trägerelemente in die Maschine eingefahren und dort verankert. Dieses erste Trägerelement dient dann als Führung zur Einbringung für das zweite Trägerelement, das dann ebenfalls in der Maschine verankert werden kann. Die miteinander verbundenen Trägerelemente können dann als Basis für die Wickeleinrichtung verwendet werden.

Weitere Ausgestaltungen ergeben sich aus den übrigen Unteransprüchen.

Zur Lösung der genannten Aufgabe wird außerdem ein Verfahren zum Wechseln eines Transportbandes vorgeschlagen, das die in Anspruch 1 genannten Schritte umfaßt. Dadurch, daß zunächst eine Trägereinrichtung an den Ort des Transportbandwechsels herangeführt wird, bedarf es, innerhalb einer Maschine zur Herstellung einer Papier- oder Kartonbahn, keiner Fundamente mehr, die einer Wechselvorrichtung zugeordnet sind. Die Trägereinrichtung kann dann in die Maschine eingefahren werden, um das Transportband zu wechseln. Dazu wird zusätzlich eine Wickeleinrichtung in die Maschine eingefahren, die einerseits das gebrauchte Transportband aufwickelt und andererseits ein neues in die Maschine einbringt.

Bevorzugt wird ein Verfahren, bei dem beim Aufwikkeln des gebrauchten Transportbandes gleichzeitig ein neues Transportband abgewickelt und mittels des gebrauchten Transportbandes eingefädelt wird.

Weitere Ausführungsformen des Verfahrens ergeben sich aus den übrigen Unteransprüchen.

Die Erfindung wird im folgenden anhand der Zeichnung näher erläutert. Es zeigen:
- Figur 1: eine schematische Seitenansicht einer Wechselvorrichtung in Arbeitsposition;
- Figur 2: einen Teil der in Figur 1 dargestellten Wechselvorrichtung und
- Figur 3: einen Teil der Wechselvorrichtung in Ruheposition.

Die im folgenden beschriebene Wechselvorrichtung wird beispielhaft im Zusammenhang mit einer Papierherstellungsmaschine beschrieben, innerhalb derer eine in einem Stoffauflauf entstehende Papierbahn hindurchgeführt wird. Zur Beförderung der Papierbahn werden Transportbänder eingesetzt, die die Papierbahn beispielsweise mäanderförmig über Trockenzylinder und Bahnleitwalzen führen. Die Transportbänder werden auch als Siebbänder oder Filze bezeichnet.

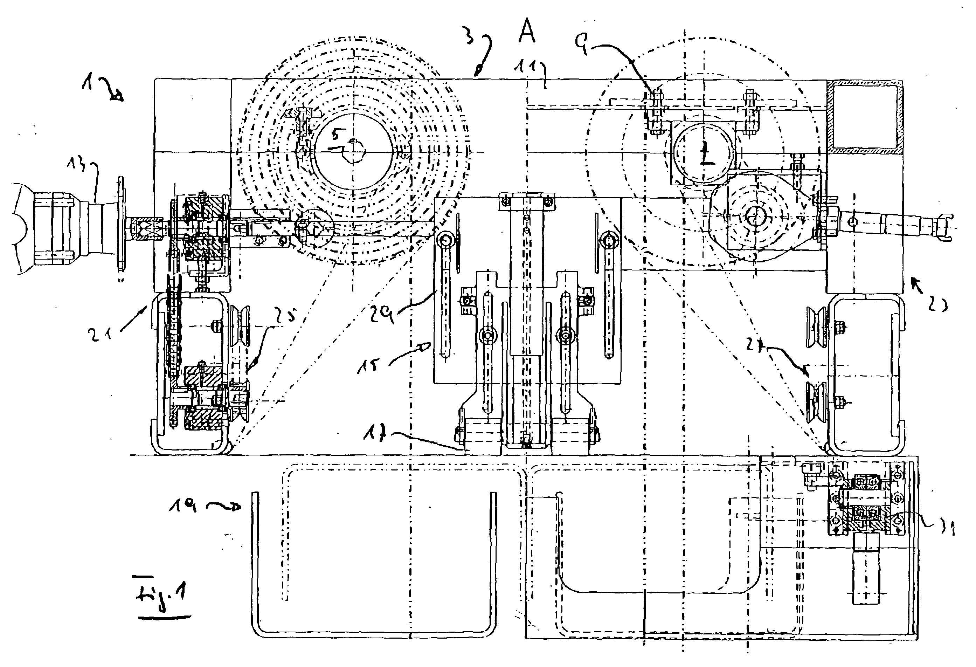

Die in Figur 1 dargestellte Wechselvorrichtung 1 weist eine Wickeleinrichtung 3 auf, die zwei Wikkelstangen 5 und 7 umfaßt. Auf einer der Wickelstangen, beispielsweise auf der linken Wickelstange 5, befindet sich bei Beginn des Wechsels des Transportbandes ein aufgewickeltes, neues Transportband, während die zweite Wickelstange 7 leer ist und dazu dient, das gebrauchte Transportband aufzunehmen.

Die Wickelstangen 5 und 7 sind mittels einer geeigneten Lagerung 9 an einem hier im wesentlichen U-förmig ausgebildeten Tragrahmen 11 angebracht und mit je einem geeigneten Antrieb 13, 13' verbunden. Es ist denkbar, lediglich eine der Wickelstangen mit einem Antrieb zu versehen und mit diesem das gebrauchte Transportband aus der Papierherstellungsmaschine herauszuziehen, während gleichzeitig das neue Transportband von der zugehörigen Wickelstange abgerollt wird.

An dem Tragrahmen 11 greift eine Rollvorrichtung 15 an, die über geeignete Rollen 17 verfügt, mit denen die Rollvorrichtung 15 und damit die Wechselvorrichtung 1 auf einer Trägereinrichtung 19 rollbar gelagert werden kann.

Auf den senkrecht nach unten verlaufenden Tragarmen 21 und 23 der Wickeleinrichtung 3 sind Rollen umfassende Führungseinrichtungen 25 und 27 vorgesehen, die, wie unten noch beschrieben wird, mit Führungseinrichtungen an der Trägereinrichtung 19 zusammenwirken können.

Die Rollvorrichtung 15 ist höhenveränderbar ausgebildet, das heißt, die Rollen 17 können gegenüber dem Grundkörper 29 der Rollvorrichtung 15 eingefahren werden, so daß sich die von der Rollvorrichtung 15 getragene Wickeleinrichtung 3 absenkt.

An den Stellen innerhalb der Papierherstellungsmaschine, an der ein Wechsel des Transportbandes möglich ist, können Stabilisierungseinrichtungen 31 vorgesehen werden, die ein Verkanten der Wickeleinrichtung 3 verhindern.

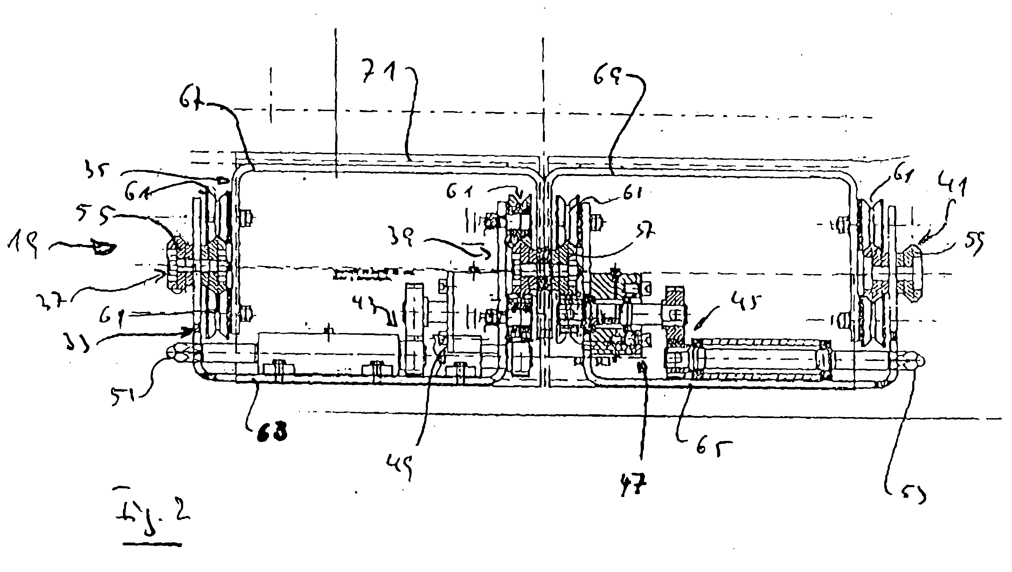

Die Trägereinrichtung 19 kann, wie aus Figur 2 ersichtlich, zweiteilig ausgebildet sein und ein erstes, unteres Trägerelement 33 und ein zweites, oberes Trägerelement 35 umfassen. Die Länge der Trägereinrichtung 19 ist so gewählt, daß sich diese über die gesamte Breite der Papierherstellungsmaschine erstreckt. Bei einem Wechsel des Transportbandes wird die Wechselvorrichtung 1 beziehungsweise deren Trägereinrichtung 19 an den Ort des Transportbandwechsels herangeführt und quer zur Laufrichtung des Transportbandes ausgerichtet. Die beiden Trägerelemente 33 und 35 sind mittels geeigneter Führungseinrichtungen 37, 39 und 41 -in Längsrichtung der Trägereinrichtung 19 gesehen- gegeneinander verschiebbar. Es kann also zunächst das Trägerelement 35 in die Papierherstellungsmaschine eingefahren und dort verankert werden. Dann wird das Trägerelement 33 unter Führung des Trägerelements 35 in die Papierherstellungsmaschine eingefahren und dort verankert. Die Trägerelemente 33 und 35 können, wie aus Figur 2 ersichtlich, mit einem Antrieb 43, 45 versehen sein, um die Verlagerung in die Papierherstellungsmaschine hinein zu vereinfachen. Hier sind lediglich Getriebeeinrichtungen 47 und 49 sowie Achsstummel 51 und 53 dargestellt, an denen ein geeigneter Antrieb angreifen kann.

Die Führungseinrichtungen 37, 39 und 41 weisen über die Länge der Trägereinrichtung 19 erstreckende Schienen 55, 57 und 59 auf, an denen Rollen 61 vorzugsweise beidseitig eingreifen, um eine optimale Führung und Stabilisierung der beiden Trägerelemente 33 und 35 gegeneinander zu gewährleisten. Die Rollen 61 weisen hier V-förmige Vertiefungen in ihren Umfangsflächen auf, in die komplementär ausgebildete Vorsprünge der Schienen eingreifen, so daß einerseits eine Führung in Längsrichtung der Trägereinrichtung 19 sichergestellt ist und andererseits vermieden wird, daß in Querrichtung eine Verlagerung der Trägerelemente zueinander stattfindet, was zu einer Destabilisierung der Trägereinrichtung 19 führen könnte.

Die Schienen 55 und 59 ragen über die seitlichen Begrenzungswände der Trägereinrichtung 19 hinaus. Sie können in die Rollen der Führungseinrichtungen 25 und 27 eingreifen, die auf der Innenseite der Tragarme 21 und 23 des Tragrahmens 11 der Wickeleinrichtung 3 vorgesehen sind.

Aus Figur 2 ist ersichtlich, daß das untere Trägerelement 33 zwei Tragkörper 63 und 65 umfaßt, die im wesentlichen U-förmig ausgebildet sind, wobei an den Schenkeln Teile der Führungseinrichtungen 37, 39 und 41 angebracht sind. Die Basis der Tragkörper 63 und 65 dient hier als Auflagefläche der Trägereinrichtung 19 auf einem Untergrund.

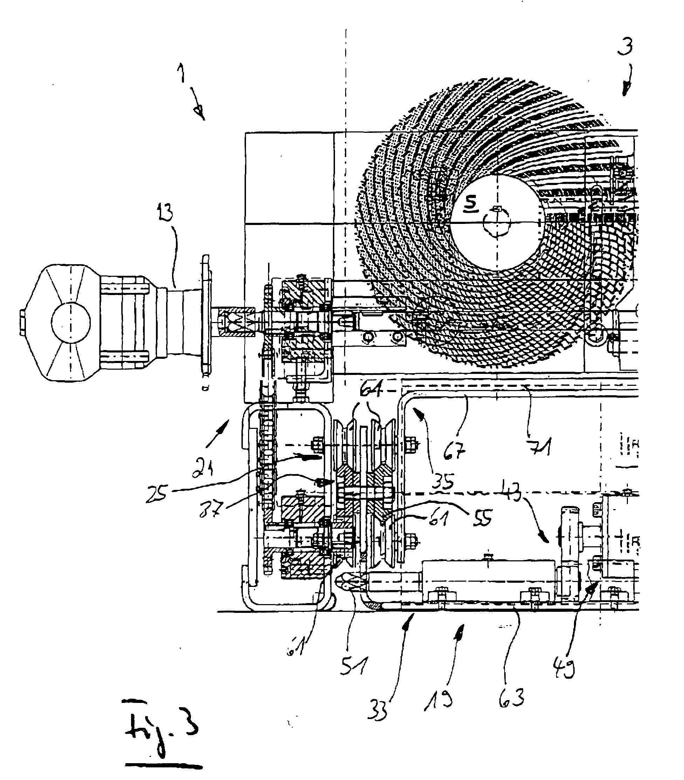

Aus Figur 3 ist ersichtlich, daß die Wechselvorrichtung 1, von der hier nur die linke Hälfte dargestellt ist, sehr kompakt baut, wenn die Wickeleinrichtung 3 auf die Trägereinrichtung 19 aufgesetzt wird, wobei die Führungseinrichtungen 25 und 27 an den Schienen 55 und 59 der Trägereinrichtung 19 eingreifen. Diese Position der Wickeleinrichtung 3 und der Trägereinrichtung 19 wird gewählt, wenn die Wechselvorrichtung 1 nicht im Einsatz ist. Das Zusammenfügen von Wickeleinrichtung 3 und Trägereinrichtung 19 ist dann möglich, wenn die Rollen 17 vollständig in den Grundkörper 29 der Rollvorrichtung 15 eingefahren sind und wenn der Grundkörper 29 ganz in seine oberste Grundstellung zurückgefahren ist. Ein Vergleich der Figuren 1 und 3 zeigt, daß in Figur 1 der Grundkörper in seiner untersten Arbeitsstellung angeordnet ist und sich in Figur 3 in seiner ganz nach oben verlagerten Grundstellung befindet.

Entsprechend ist das obere Trägerelement 35 aus zwei U-förmigen Tragkörpern 67 und 69 aufgebaut, an deren Schenkeln ebenfalls Teile der Führungseinrichtungen 37, 39 und 41 angebracht sind. Die Schenkel der Tragkörper 63 bis 69 greifen ineinander, so daß sich ein relativ leichter aber sehr stabiler Aufbau der Trägereinrichtung 19 ergibt. Die Basis der Tragkörper 67 und 69 kann als Auflagefläche, beispielsweise für ein Nadel- beziehungsweise Nagelbrett 71 dienen, auf das unten noch genauer eingegangen wird. Außerdem können die Rollen 17 der Rollvorrichtung 15 auf der Basis der Tragkörper 67 und 69 entlangfahren, so daß die Wickeleinrichtung 3 in Längsrichtung zur Trägereinrichtung 19 verfahrbar ist.

Im folgenden wird auf die Funktion der Wechselvorrichtung und auf das Verfahren zum Wechseln einer Transportbahn innerhalb einer Papier- oder Kartonherstellungsmaschine näher eingegangen:

Die Wechselvorrichtung 1 wird im Ruhezustand als kompakte Einheit aufbewahrt, wobei die Wickeleinrichtung 3 auf die Trägereinrichtung 19 aufgeschoben wird, wie dies anhand von Figur 3 ersichtlich ist.

Im abgestellten Zustand kann die Wechselvorrichtung 1 zum Um- oder Abwickeln von neuen und alten Transportbändern beziehungsweise Filzen verwendet werden. Dies ist besonders dann wichtig, wenn die Papierseite gewendet werden soll.

Bei einem Wechsel eines Transportbandes beziehungsweise Filzes innerhalb einer Papierherstellungsmaschine wird die Trägereinrichtung 19 an den Ort des Filzwechsels herangefahren und quer zur Papierherstellungsmaschine, das heißt, quer zur Laufrichtung des Transportbandes, angeordnet. Dann wird ein erstes Trägerelement, beispielsweise das untere Trägerelement 33, teleskopartig etwa zur Hälfte in die Papierherstellungsmaschine eingefahren, vorzugsweise unterhalb des Filzlaufes. Dann wird es mit dem zweiten oberen Trägerelement 35 so weit in die Papierherstellungsmaschine eingefahren, daß es auf deren gegenüberliegenden Seite -beispielsweise auf der Triebseite- fest verankert ist. Nunmehr kann auch das zweite Trägerelement, hier also das obere Trägerelement 35, in die Papierherstellungsmaschine eingefahren werden, wobei die beiden Trägerelemente 33 und 35 durch die Führungseinrichtungen 37, 39 und 41 sicher aneinander geführt werden. Schließlich wird das zweite Trägerelement ebenfalls in der Papierherstellungsmaschine fixiert.

Es ist auch möglich, das erste, halb in die Maschine eingefahrene Trägerelement als Führung für das zweite Trägerelement zu verwenden, das zweite Trägerelement zuerst in der Maschine zu verankern und dann das erste Trägerelement unter Führung des zweiten Trägerelements in die Maschine einzufahren und dort ebenfalls zu verankern.

Durch das Einbringen der Trägerelemente wird eine sichere Basis für die Wickeleinrichtung 3 geschaffen, die in die Papierherstellungsmaschine eingefahren werden kann, sobald der auszutauschende Filz so entspannt ist, daß er auf der Basis der Tragkörper 67 und 69 aufliegt. Die Wickeleinrichtung 3 wird oberhalb des Filzes in die Papierherstellungsmaschine eingefahren, während die Trägereinrichtung 19 unterhalb des Filzes liegt. Das Einbringen der Wickeleinrichtung 3 wird durch die Rollvorrichtung 15 wesentlich erleichtert, wenn Rollen 17 ausgefahren sind und -gegebenenfalls der Tragarm 11 mit der möglichen Stabilisierungseinrichtung 31- angehoben ist.

Wenn die Wickeleinrichtung 3 vollständig in die Papierherstellungsmaschine eingefahren ist, werden die Rollen 17 der Rollvorrichtung 15 eingefahren, so daß der Tragrahmen 11 der Wickeleinrichtung 3 auf geeigneten Widerlagern der Stabilisierungseinrichtung 31 aufliegt.

Zur Fixierung des über die Trägereinrichtung 19 verlaufenden Filzes kann ein Nagelbrett 71 auf die Basis der Tragkörper 67 und 69 aufgebracht werden, durch das der Filz sicher gehalten und fixiert wird.

Der Filz wird nun, auf bekannte Weise, vorzugsweise entlang einer vorgegebenen Nahtstelle, die sich etwa in der Mitte der Trägereinrichtung 19 quer über die Breite der Papierherstellungsmaschine beziehungsweise Wechselvorrichtung 1 erstreckt, aufgetrennt. Die Enden des aufgetrennten Filzes werden einerseits mit der leeren Wickelstange verbunden, andererseits mit dem Ende des neuen Filzes beziehungsweise Transportbandes, das in die Papierherstellungsmaschine eingebracht werden kann. über den der Wickelstange 7 zugeordneten, beispielsweise als Kettenantrieb ausgebildeten Antrieb 13' wird nun die bislang leere Wickelstange 5 angetrieben und damit der gebrauchte Filz aus der Papierherstellungsmaschine herausgezogen. Dadurch, daß das gegenüberliegende Ende des Transportbandes beziehungsweise Filzes aus der Papierherstellungsmaschine herausgezogen wird, wird gleichzeitig das neue mit diesem Ende verbundene Transportband von der Wickelstange 5 abgerollt und in die Papierherstellungsmaschine eingezogen beziehungsweise eingefädelt.

Wenn das alte Transportband vollständig aufgewikkelt und das neue in die Papierherstellungsmaschine eingefädelt ist, werden die Enden des neuen Transportbandes miteinander verbunden. Die Wechselvorrichtung 1 ist so ausgebildet, daß die Enden während des Verbindens in Laufrichtung sichergehalten werden können. Es ist auch eine Entlastung der Enden durch eine Verschiebung in Richtung der Naht möglich, um das Schließen zu vereinfachen. Da die Wickeleinrichtung 3 auf Rollen 17 steht, können die Seitenränder des Transportbandes exakt aufeinander ausgerichtet werden.

Nach dem Verbinden der Enden des Transportbandes wird die Wickeleinrichtung 3 aus der Papierherstellungsmaschine ausgefahren, wobei wiederum vorzugsweise die Rollvorrichtung 15 eingesetzt wird, deren Rollen 17 etwas ausgefahren wurden, so daß die Wikkeleinrichtung 3 frei auf der Basis der Tragkörper 67 und 69 beweglich angeordnet und auf der Trägereinrichtung 19 herausgefahren werden kann.

Nun können die Trägerelemente 33 und 35 gelöst und aus der Papierherstellungsmaschine herausgefahren werden.

Für die Lagerung der Wechselvorrichtung 1 und auch für deren Transport zur jeweiligen Einsatzposition innerhalb der Papierherstellungsmaschine werden die Wickeleinrichtung 3 und die Trägereinrichtung 19 vorzugsweise übereinander geschoben, wie dieses anhand von Figur 3 erläutert wurde, um einen möglichst kompakten, raumsparenden Aufbau zu gewährleisten.

Nach allem wird deutlich, daß bei der hier beschriebenen Wechselvorrichtung beziehungsweise dem erläuterten Verfahren zum Wechseln eines Transportbandes, auf stationäre, in die Papierherstellungsmaschine eingebrachte Trägerkonstruktionen für Wechselvorrichtungen gänzlich verzichtet werden kann, wodurch einerseits sich eine deutliche Raumersparnis und andererseits eine Reduktion der Konstruktionskosten einstellen. Die Wechselvorrichtung ist relativ einfach und leicht aufgebaut. Das Wechselverfahren ist, wie aus dem oben Gesagten ersichtlich, einfach durchführbar. Da sowohl die Trägerelemente 33 und 35 der Trägereinrichtung 19 eine sichere Führung aneinander aufweisen, als auch die Wickeleinrichtung 3 sicher an der Trägereinrichtung 19 geführt wird, sind die Unfallgefahren bei einem Transportbandwechsel gegenüber herkömmlichen Verfahren wesentlich reduziert.

## Patentansprüche

1. Wechselvorrichtung für ein in einer Maschine zur Herstellung einer Papier- oder Kartonbahn - beispielsweise in einer Trockenpartie der Maschine - verwendetes Transportband, mit einer Wickeleinrichtung zum Ausbringen eines gebrauchten und zum Einbringen eines neuen Transportbandes, **gekennzeichnet durch,** eine die Wickeleinrichtung (3) stützende, mobile Trägereinrichtung (19), die an den Ort des Transportbandwechsels verlagerbar ist und auf welcher die Wickeleinrichtung (3) verfahrbar ist.

2. Wechselvorrichtung nach Anspruch 1, **dadurch gekennzeichnet,** dass eine der Wickeleinrichtung (3) zugeordnete Rollvorrichtung (15) vorgesehen ist.

3. Wechselvorrichtung nach Anspruch 2, **dadurch gekennzeichnet,** dass die Rollvorrichtung (15) höhenveränderlich ausgebildet ist.

4. Wechselvorrichtung nach einem der vorhergehenden Ansprüche, **dadurch gekennzeichnet,** dass die Trägereinrichtung (19) mindestens zwei gegeneinander verlagerbare Trägerelemente (33, 35) aufweist.

5. Wechselvorrichtung nach Anspruch 4, **dadurch gekennzeichnet,** dass mindestens ein Trägerelement (33, 35) wenigstens zwei Tragkörper (63, 65; 67, 69) umfasst.

6. Wechselvorrichtung nach einem der Ansprüche 4 und 5, **dadurch gekennzeichnet,** dass die Trägereinrichtung (19) mit mindestens einer die Relativbewegung der Trägerelemente (33, 35) ermöglichende Führungseinrichtung (37, 39, 41) versehen ist.

7. Wechselvorrichtung nach Anspruch 6, **dadurch gekennzeichnet,** dass die Führungseinrichtung (37, 39, 41) einander zugeordnete Rollen (61) und Schienen (55, 57, 59) umfasst.

8. Wechselvorrichtung nach einem der vorhergehenden Ansprüche, **dadurch gekennzeichnet,** dass die Wickeleinrichtung (3) mit mindestens einer Führungseinrichtung (25, 27) versehen ist.

9. Wechselvorrichtung nach Anspruch 8, **dadurch gekennzeichnet,** dass die Führungseinrichtung (25, 27) der Wickeleinrichtung (3) mit der Führungseinrichtung (37, 41) der Trägereinrichtung (19) zusammenwirkt.

10. Verfahren zum Wechseln eines in einer Maschine zur Herstellung einer Papier- oder Kartonbahn - beispielsweise in einer Trockenpartie der Maschine - verwendeten Transportbandes, **gekennzeichnet durch** folgende Schritte:
- Verlagerung einer Trägereinrichtung (19) an den Ort des Transportbandwechsels;
- Einfahren der Trägereinrichtung (19) in die Maschine zur Herstellung der Papier- oder Kartonbahn;
- Verfahren einer Wickeleinrichtung (3) mittels einer Rollvorrichtung (15) auf der Trägereinrichtung (19) in die Maschine;
- Aufwickeln des gebrauchten Transportbandes und
- Einbringen des neuen Transportbandes.

11. Verfahren nach Anspruch 10, **dadurch gekennzeichnet,** dass zumindest ein erstes Trägerelement (35) in die Maschine eingefahren wird.

12. Verfahren nach Anspruch 11, **dadurch gekennzeichnet,** dass ein zweites Trägerelement (33) entlang dem ersten Trägerelement (35) in die Maschine eingefahren wird.

13. Verfahren nach einem der Ansprüche 10 bis 12, **dadurch gekennzeichnet,** dass das auszuwechselnde Transportband entspannt und auf der Trägereinrichtung (19) aufgelegt wird.

14. Verfahren nach einem der Ansprüche 10 bis 13, **dadurch gekennzeichnet,** dass das Transportband entspannt, entlang einer Naht aufgetrennt und ein Ende mit der Wickeleinrichtung (3) verbunden wird.

15. Verfahren nach einem der Ansprüche 10 bis 14, **dadurch gekennzeichnet,** dass beim Aufwickeln des gebrauchten Transportbandes gleichzeitig ein neues Transportband abgewickelt und mittels des gebrauchten Transportbandes eingefädelt wird.

## Claims

1. Changing device for a transport belt which is used in a machine for manufacturing a paper or board web - for example in a drying section of the machine -, which device has a winding device for removing a used transport belt and for introducing a new transport belt, characterized by a mobile carrier device (19) which supports the winding device (3), can be moved to the location of the transport-belt change and on which the winding device (3) can be moved.

2. Changing device according to Claim 1, characterized in that a rolling device (15) associated with the winding device (3) is provided.

3. Changing device according to Claim 2, characterized in that the rolling device (15) is designed such that its height can be varied.

4. Changing device according to one of the preceding claims, characterized in that the carrier device (19) has at least two carrier elements (33, 35) which can be moved with respect to each other.

5. Changing device according to Claim 4, characterized in that at least one carrier element (33, 35) comprises at least two carrying bodies (63, 65; 67, 69).

6. Changing device according to either of Claims 4 and 5, characterized in that the carrier device (19) is provided with at least one guide device (37, 39, 41) which permits relative movement of the carrier elements (33, 35).

7. Changing device according to Claim 6, characterized in that the guide device (37, 39, 41) comprises rollers (61) and rails (55, 57, 59) which are associated with one another.

8. Changing device according to one of the preceding claims, characterized in that the winding device (3) is provided with at least one guide device (25, 27).

9. Changing device according to Claim 8, characterized in that the guide device (25, 27) of the winding device (3) cooperates with the guide device (37, 41) of the carrier device (19).

10. Method of changing a transport belt which is used in a machine for manufacturing a paper or board web - for example in a drying section of the machine - characterized by the following steps:
- moving a carrier device (19) to the location of the transport-belt change;
- moving the carrier device (19) into the machine for manufacturing the paper or board web;
- moving a winding device (3) into the machine by means of a rolling device (15) on the carrier device (19);
- winding up the used transport belt and
- introducing the new transport belt.

11. Method according to Claim 10, characterized in that at least one first carrier element (35) is moved into the machine.

12. Method according to Claim 11, characterized in that a second carrier element (33) is moved into the machine along the first carrier element (35).

13. Method according to one of Claims 10 to 12, characterized in that the transport belt to be changed is relieved of tension and placed on the carrier device (19).

14. Method according to one of Claims 10 to 13, characterized in that the transport belt is relieved of tension and severed along a seam, and one end is connected to the winding device (3).

15. Method according to one of Claims 10 to 14, characterized in that when the used transport belt is being wound up, a new transport belt is unwound simultaneously and is threaded in by means of the used transport belt being used.

## Revendications

1. Dispositif de changement pour une bande de transport utilisée dans une machine de fabrication d'une bande de papier ou de carton - par exemple dans une partie sèche de la machine, comprenant un dispositif d'enroulement pour faire sortir une bande de transport usée et introduire une nouvelle bande de transport, **caractérisé par** un dispositif de support mobile (19) supportant le dispositif d'enroulement (3), lequel peut être décalé sur le lieu du changement de bande de transport et sur lequel le dispositif d'enroulement (3) peut être déplacé.

2. Dispositif de changement selon la revendication 1, **caractérisé en ce qu'**il est prévu un dispositif de galet (15) associé au dispositif d'enroulement (3).

3. Dispositif de changement selon la revendication 2, **caractérisé en ce que** le dispositif de galet (15) est conçu de manière variable en hauteur.

4. Dispositif de changement selon l'une quelconque des revendications précédentes, **caractérisé en ce que** le dispositif de support (19) présente au moins deux éléments de support (33, 35) décalables l'un par rapport à l'autre.

5. Dispositif de changement selon la revendication 4, **caractérisé en ce qu'**au moins un élément de support (33, 35) comprend au moins deux corps de support (63, 65; 67, 69).

6. Dispositif de changement selon l'une quelconque des revendications 4 et 5, **caractérisé en ce que** le dispositif de support (19) est pourvu d'au moins un dispositif de guidage (37, 39, 41) permettant le mouvement relatif des éléments de support (33, 35).

7. Dispositif de changement selon la revendication 6, **caractérisé en ce que** le dispositif de guidage (37, 39, 41) comprend des galets (61) et des rails (55, 57, 59) associés les uns aux autres.

8. Dispositif de changement selon l'une quelconque des revendications précédentes, **caractérisé en ce que** le dispositif d'enroulement (3) est pourvu d'au moins un dispositif de guidage (25, 27).

9. Dispositif de changement selon la revendication 8, **caractérisé en ce que** le dispositif de guidage (25, 27) du dispositif d'enroulement (3) coopère avec le dispositif de guidage (37, 41) du dispositif de support (19).

10. Procédé de changement d'une bande de transport utilisée dans une machine de fabrication d'une bande de papier ou de carton - par exemple dans une partie sèche de la machine, **caractérisé par** les étapes suivantes :
- décalage d'un dispositif de support (19) au lieu du changement de bande de transport ;
- introduction du dispositif de support (19) dans la machine de fabrication de la bande de papier ou de carton ;
- déplacement d'un dispositif d'enroulement (3) au moyen d'un dispositif de galet (15) sur le dispositif de support (19) dans la machine ;
- enroulement de la bande de transport usée et
- introduction de la nouvelle bande de transport.

11. Procédé selon la revendication 10, **caractérisé en ce qu'**au moins un premier élément de support (35) est introduit dans la machine.

12. Procédé selon la revendication 11, **caractérisé en ce qu'**un deuxième élément de support (33) est introduit dans la machine le long du premier élément de support (35).

13. Procédé selon l'une quelconque des revendications 10 à 12, **caractérisé en ce que** la bande de transport à changer est détendue et placée sur le dispositif de support (19).

14. Procédé selon l'une quelconque des revendications 10 à 13, **caractérisé en ce que** la bande de transport est détendue, séparée suivant une couture et une extrémité est reliée au dispositif d'enroulement (3).

15. Procédé selon l'une quelconque des revendications 10 à 14, **caractérisé en ce que** lors de l'enroulement de la bande de transport usée, une nouvelle bande de transport est déroulée simultanément et est chargée au moyen de la bande de transport usée.
